# FASCICULE DE BREVET EUROPEEN

(11) **EP 1 859 319 B1**
(45) Date de publication et mention de la délivrance du brevet: **27.08.2008**
(21) Numéro de dépôt: 06726203.0
(22) Date de dépôt: 01.03.2006
(51) Int. Cl.: G02F 1/153, G02F 1/163

(54) **DISPOSITIF ELECTROCOMMANDABLE A PROPRIETES OPTIQUES ET/OU ENERGETIQUES VARIABLES ET SON PROCEDE D'ALIMENTATION**
ELEKTRONISCH GESTEUERTE VORRICHTUNG MIT VARIABLEN OPTISCHEN UND/ODER LEISTUNGSEIGENSCHAFTEN SOWIE ANSTEUERUNGSVERFAHREN DAFÜR
ELECTRONICALLY CONTROLLED DEVICE WITH VARIABLE OPTICAL AND/OR POWER PROPERTIES AND POWER SUPPLY METHOD THEREFOR

(30) Priorité: 03.03.2005 FR 0550563
(43) Date de publication de la demande: 28.11.2007
(73) Titulaire: SAINT-GOBAIN GLASS FRANCE, 92400 Courbevoie (FR)
(72) Inventeur: FANTON, Xavier, F-93600 Aulnay Sous Bois (FR); ROCANIERE, Cécile, F-75011 Paris (FR); TARASCON, Jean-Marie, F-91540 Mennecy (FR); ROUGIER, Aline, F-80000 Amiens (FR); DUBRENAT, Samuel, F-75017 Paris (FR); GOURBA, Emmanuel, F-75013 Paris (FR); GIRON, Jean-Christophe, F-52074 Aachen (FR)
(74) Mandataire: Colombier, Christian
(86) Numéro de dépôt international: PCT/FR2006/050179
(87) Numéro de publication internationale: WO 2006/092532

(56) Documents cités:
- EP-A- 0 679 924
- EP-A- 1 434 083
- FR-A- 2 857 617
- US-A- 4 426 643

## Description

La présente invention concerne un procédé d'alimentation d'un dispositif électrocommandable à propriétés optiques et/ou énergétiques variables. Elle s'intéresse plus particulièrement aux dispositifs utilisant des systèmes électrochromes, fonctionnant en transmission ou en réflexion.

Les systèmes électrochromes ont été très étudiés. Ils sont construits sur le modèle suivant dit 'à cinq couches' : TC1 / EC1 / EL /EC2 / TC2. TC1 et TC2 sont des matériaux conducteurs électroniques, EC1 et EC2 sont des matériaux électrochromes capables d'insérer de façon réversible et simultanée des cations et des électrons et EL est un matériau électrolyte qui est à la fois un isolant électronique et un conducteur ionique. Les conducteurs électroniques sont connectés à une alimentation électrique externe et l'application d'une différence de potentiel adaptée entre les deux conducteurs électroniques commande le changement de coloration du système. Sous l'effet de la différence de potentiel les ions se désinsèrent d'un matériau électrochrome et s'insèrent dans l'autre matériau électrochrome en passant par le matériau électrolyte. Les électrons sont extraits d'un matériau électrochrome pour aller dans l'autre matériau électrochrome via les conducteurs électroniques et le circuit d'alimentation externe pour contrebalancer les charges et assurer l'électroneutralité des matériaux.

La modification de leur degré d'oxydation suite à ces insertions/désinsertions conduit à une modification dans leurs propriétés optiques et/ou thermiques (par exemple, pour l'oxyde de tungstène, un passage d'une coloration bleue à un aspect incolore, et pour l'oxyde d'iridium, un passage d'une coloration jaunâtre à un aspect incolore)

Le système électrochrome est généralement déposé sur un support transparent ou non, de nature organique ou minérale, qui prend alors le nom de substrat. Dans certains cas deux substrats peuvent être utilisés, soit chacun possède une partie du système électrochrome et le système complet est obtenu par assemblage des deux substrats, soit un substrat comporte l'ensemble du système électrochrome et l'autre est destiné à protéger le système.

La commutation du système électrocommandable consiste en un processus électrochimique complexe défini par un transfert de charge (migration électrique des espèces chargées (ions et électrons) au sein d'un empilement de couches minces de quelques centaines de nanomètres d'épaisseur) et en un transfert de masse, lié au déplacement dans l'empilement de couches des espèces chargées.

Sous l'effet de la différence de potentiel, le transfert de charge au sein du système électrocommandable conduit à un équilibre électrochimique correspondant à un état coloré ou décoloré du système et donc à certaines propriétés optiques caractérisées par exemple par le niveau de transmission lumineuse atteint (généralement exprimé en %).

Or, les fabricants de système électrocommandable ont développé des alimentations électriques qui délivrent des différences de potentiel correspondant à des points de fonctionnement pour lesquels une optimisation d'une part, optique du système : homogénéité de la coloration, vitesse de commutation, contraste et d'autre part, mécanique : conservation de ces fonctionnalités après plusieurs cycles de coloration/décoloration (la durabilité) est obtenue.

Bien que ces systèmes donnent entière satisfaction, les fabricants se sont aperçus que cette optimisation tant optique que mécanique n'était pas pérenne dans le temps. Pour un point de fonctionnement donné, correspondant à une différence de potentiel appliquée aux bornes du système électrocommandable, il y avait une dérive dans le temps du point de fonctionnement (les performances optiques ne sont plus obtenues pour cette valeur de potentiel).

Le document EP0679924 décrit un dispositif électrochrome ayant une électrode de référence correspondant au préambule de la revendication 1.

Partant d'un postulat qu'il est difficile (quasi impossible) de pourvoir les systèmes électrocommandables d'un capteur de mesure optique (au niveau notamment du pourcentage de transmission lumineuse), les inventeurs ont découvert de manière tout à fait surprenante qu'il était possible d'adapter, de modifier le point de fonctionnement du système électrocommandable, lui permettant ainsi de garantir des performances optimales dans le temps, en s'affranchissant de toute mesure optique.

La présente invention vise donc à pallier les inconvénients des alimentations antérieures en proposant une nouvelle conception de système électrocommandable et de son procédé d'alimentation qui s'affranchissent de toutes les variations consécutives à une dérive du point de fonctionnement.

A cet effet, le système électrocommandable à propriétés optiques/énergétiques, de transmission ou de réflexion variables, comportant au moins un substrat porteur muni d'un empilement de couches permettant la migration d'espèces actives, notamment électrochrome comprenant au moins deux couches actives, séparées par au moins une couche à fonction électrolyte, ledit empilement étant disposé entre deux conducteurs électroniques connectés respectivement à des amenées de courant, respectivement inférieure et supérieure (« inférieure » correspondant à l'amenée de courant la plus proche du substrat porteur, par opposition à l'amenée de courant « supérieure » qui est la plus éloignée dudit substrat), intègre dans la couche à fonction électrolyte au moins une couche mixte à base d'une couche métallique et d'une couche de passivation du même métal que celui de la couche métallique.

Grâce à cette couche mixte intégrée au sein de la couche à fonction électrolyte, il est possible de créer au sein de l'empilement de couches formant le système électrocommandable, une troisième électrode, dite de référence, adaptée pour connaître la répartition des potentiels au sein du système.

Dans des modes de réalisation préférés de l'invention, on peut éventuellement avoir recours en outre à l'une et/ou à l'autre des dispositions suivantes :
- la couche de passivation comporte un cation du même métal que celui de la couche métallique,
- la couche de passivation comporte un oxyde du même métal que celui de la couche métallique,
- la couche de passivation comporte un halogénure, notamment un chlorure, du même métal que celui de la couche métallique,
- la couche de passivation comporte un sulfate, un nitrate du même métal que celui de la couche métallique
- le métal est choisi parmi la famille suivante : tous les éléments de transition compris entre la colonne IVB (Ti-Zr-Hf) et la colonne IIB (Zn-Cd-Hg) du tableau périodique ou un mélange de ces derniers, de préférence parmi les éléments suivants : Cu, Ag, Ni, Al, Ti, Mo, W, Cr, Fe, Co), ou un mélange de ces derniers.
- l'épaisseur de la couche mixte est comprise entre 5 nm et 300 nm, de préférence comprise entre 20 et 50 nm
- la couche à fonction électrolyte comporte au moins une couche en matériau essentiellement minéral,
- la couche mixte est intégrée au sein de la couche en matériau essentiellement minéral,
- la couche mixte est en retrait de l'une au moins des couches électrochromes
- la couches mixte est recouverte au moins en partie par l'une au moins des couches électrochromes,
- la couche mixte est intégrée au sein d'une portion de volume de la couche en matériau essentiellement minéral,
- la couche à fonction électrolyte comporte au moins une couche à base d'un matériau choisi parmi l'oxyde de tungstène (WO₃), l'oxyde de tantale (Ta₂O₅), l'oxyde d'antimoine (Sb₂O₅), l'oxyde de nickel (NiOₓ), l'oxyde d'étain (SnO₂), l'oxyde de zirconium (ZrO₂), l'oxyde d'aluminium (Al₂O₃), de l'oxyde de silicium (SiO₂) éventuellement allié avec de l'aluminium ou du bore, l'oxyde de niobium (Nb₂O₅), l'oxyde de chrome (Cr₂O₃), l'oxyde de cobalt (Co₃O₄), l'oxyde de titane (TiO₂), l'oxyde de zinc (ZnO)éventuellement allié avec de l'aluminium, l'oxyde de vanadium (V₂O₅) éventuellement allié avec de l'aluminium, oxyde d'étain et de zinc (SnZnOₓ), au moins un de ces oxydes étant éventuellement hydrogéné, ou nitruré,
- outre la couche en matériau essentiellement minéral, la couche à fonction électrolyte comporte au moins une autre couche à base d'un matériau polymère, ou à base de sels fondus,
- l'autre couche du type polymère est choisie parmi la famille des polyoxyalkylènes, notamment du polyoxyéthylène ou parmi la famille des polyéthylènes imines
- l'autre couche du type polymère est sous la forme d'un liquide anhydre ou aqueux ou à base de gel(s), ou de polymère(s), notamment un électrolyte du type couche à composé(s) hydrogéné(s) et/ou azoté(s) du type POE:H₃PO₄ ou encore une couche à composé(s) hydrogéné(s) et/ou azoté(s)/PEI :H₃PO₄, ou plus encore un polymère feuilletable,
- chaque couche électrochimiquement active comporte au moins un des composés suivants : oxyde de tungstène W, de niobium Nb, d'étain Sn, de bismuth Bi, de vanadium V, de nickel Ni, d'iridium lr, de l'antimoine Sb, du tantale Ta, seul ou en mélange, et comprenant éventuellement un métal additionnel tel que le titane, le rhénium, le cobalt.
- le conducteur électronique est de type métallique ou du type TCO (Transparent Conductive Oxide) en In₂O₃:Sn (ITO), SnO₂:F, ZnO:Al, ou être un multi-couche du type TCO/métal/TCO, ce métal étant choisi notamment parmi l'argent, l'or, le platine, le cuivre, ou un multi-couche de type NiCr/métal/NiCr, le métal étant choisi également notamment parmi l'argent, l'or, le platine, le cuivre.

Selon un autre aspect de l'invention, celle-ci vise un également un procédé de pilotage du système électrocommandable tel que précédemment décrit.

A cet effet, le procédé d'alimentation d'un système électrocommandable à propriétés optiques/énergétiques, de transmission ou de réflexion variables, comportant au moins un substrat porteur muni d'un empilement de couches permettant la migration d'espèces actives, notamment électrochromes comprenant au moins deux couches actives, séparées par au moins une couche à fonction électrolyte comprenant au moins une couche mixte à base d'une couche métallique et d'une couche de passivation du même métal que celui de la couche métallique, la couche mixte formant une électrode de référence, ledit empilement étant disposé entre deux conducteurs électroniques connectés respectivement à des amenées de courant, respectivement inférieure et supérieure (« inférieure » correspondant à l'amenée de courant la plus proche du substrat porteur, par opposition à l'amenée de courant « supérieure » qui est la plus éloignée dudit substrat), se caractérise en ce que
- on applique, à un premier instant t1, entre les amenées de courant un mode d'alimentation électrique noté M1 correspondant à un point de fonctionnement du système électrocommandable, ce mode d'alimentation électrique donnant une première mesure du mode d'alimentation électrique,
- on relève, à ce même premier instant t, une deuxième mesure notée Vmes 1 correspondant à une différence de potentiel entre l'une des amenées de courant et l'électrode de référence, et on relève au moins une grandeur caractéristique du système électrocommandable,
- à un deuxième instant t2, en fonction du niveau de la grandeur caractéristique désirée pour le système électrocommandable, on applique entre les amenées de courant un mode d'alimentation électrique M2, ce mode d'alimentation électrique donnant une troisième mesure du mode d'alimentation électrique et on effectue, à ce deuxième instant t2, une quatrième mesure notée Vmes2 correspondant à la différence de potentiel entre l'une des amenées de courant et l'électrode de référence,
- on compare cette quatrième mesure Vmes2 à la deuxième mesure Vmes 1,
- en fonction de l'écart entre Vmes2 et Vmes 1, on réajuste la valeur du mode d'alimentation électrique appliqué entre les amenées de courant de façon à ce que la différence de potentiel entre l'une des amenées de courant et l'électrode de référence soit égale à une valeur sélectionnée dans un tableau de référence.

Dans des modes de réalisation préférés de l'invention, on peut éventuellement avoir recours en outre à l'une et/ou à l'autre des dispositions suivantes :
- on reproduit les deux premières étapes du procédé d'alimentation pour une gamme de V1 sélectionnée entre V1min et V1max, correspondant aux grandeurs caractéristiques extrêmes souhaitées, pour obtenir pour chaque valeur de V1 la valeur de Vmes1 correspondante et on réalise ensuite un tableau de mesures de référence liant les grandeurs caractéristiques et la valeur de Vmes 1,
- le mode d'alimentation électrique qui est appliqué entre les amenées de courant est choisi parmi l'alimentation en tension, l'alimentation en courant ou l'alimentation en quantité de charges,
- la quatrième mesure Vmes2 ou la deuxième mesure Vmes 1 correspondant à une différence de potentiel est réalisée entre l'électrode de référence et l'amenée de courant supérieure,
- la quatrième mesure Vmes2 ou la deuxième mesure Vmes 1 correspondant à une différence de potentiel est réalisée entre l'électrode de référence et l'amenée de courant inférieure,
- la grandeur caractéristique est choisie parmi les paramètres optiques du système électrocommandable comme la transmission lumineuse,
- on élabore un tableau donnant l'évolution de la grandeur caractéristique pour diverses valeurs de différence de potentiel mesurée entre l'amenée de courant inférieure et l'électrode de référence,
- on élabore un tableau donnant l'évolution de la grandeur caractéristique pour diverses valeurs de différence de potentiel mesurée entre l'amenée de courant supérieure et l'électrode de référence,
- on élabore un tableau donnant l'évolution de la transmission lumineuse pour diverses valeurs de différence de potentiel mesurées entre les deux amenées de courant respectivement inférieure et supérieure,

L'invention sera décrite plus en détail au regard des dessins annexés sur lesquels :
- la figure 1 est vue de face de la face 2 objet de l'invention,
- la figure 2 est une vue en coupe selon AA de la figure 1,
- la figure 3 est une vue en coupe selon BB de la figure 1,
- les figures 4, 5 sont des vues en coupe illustrant en détail la structure de l'empilement actif intégrant l'électrode de référence,
- la figure 6 est un graphe présentant l'évolution de la transmission lumineuse en fonction d'une part de la tension appliquée aux bornes des amenées de courant, et d'autre part des niveaux tensions obtenues entre l'une des amenées de courant et l'électrode de référence.

Sur les dessins annexés, certains éléments peuvent être représentés à des dimensions plus grandes ou plus petites que dans la réalité, et ce afin de faciliter la compréhension de la figure.

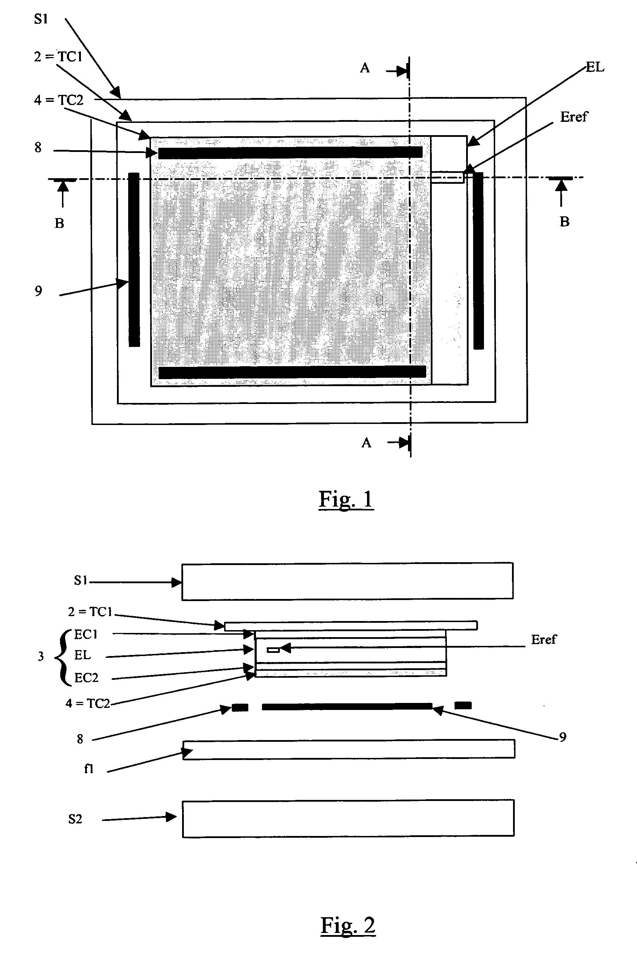

L'exemple illustré par les figures 1, 2 et 3, concerne un vitrage 1 électrochrome. Il comprend successivement, de l'extérieur vers l'intérieur de l'habitacle, deux verres S1, S2, qui sont des verres clairs (ils peuvent aussi être teintés) silico-sodo-calciques de respectivement 2,1 mm ; 2,1 mm d'épaisseur par exemple.

Les verres S 1 et S2 sont de même taille et leurs dimensions sont 150 mm x 150 mm.

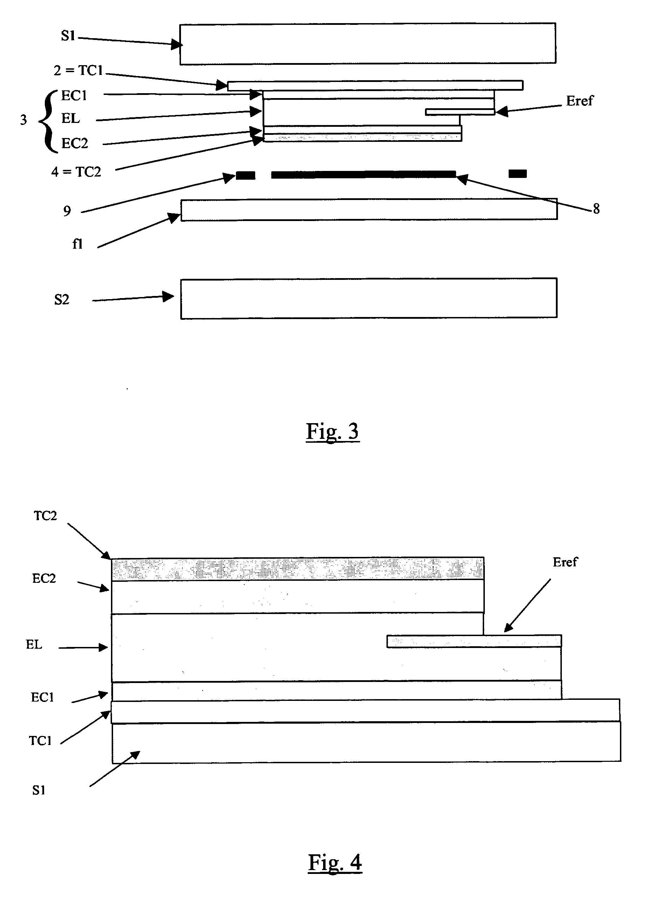

Le verre S 1 représenté en figures 2 et 3 comporte en face 2 un empilement de couches minces de type électrochrome tout solide.

Le verre S 1 est feuilleté au verre S2 par une feuille f1 thermoplastique en polyuréthane (PU) de 0,8 mm d'épaisseur (elle peut être remplacée par une feuille d' éthylènevinylacétate (EVA) ou de polyvinylbutyral (PVB).

L'empilement de couches minces électrochrome « tout solide » comporte un empilement actif 3 placé entre deux matériaux conducteurs électroniques appelés aussi collecteurs de courant 2 et 4. Le collecteur 2 est destiné à être au contact de la face 2.

Les collecteurs 2 et 4 et l'empilement actif 3 peuvent être soit sensiblement de dimensions et de formes identiques, ou soit sensiblement de dimensions et de formes différentes, et on conçoit alors que le cheminement des collecteurs 2 et 4 sera adapté en fonction de la configuration. Par ailleurs, les dimensions des substrats en particulier S1 peuvent être essentiellement supérieures à celles de 2, 4 et 3.

Les collecteurs 2 et 4 sont de type métallique ou du type TCO (Transparent Conductive Oxide) en In₂O₃:Sn (ITO), SnO₂:F, ZnO :Al, ou être un multi-couche du type TCO/métal/TCO, ce métal étant choisi notamment parmi l'argent, l'or, le platine, le cuivre. Il peut s'agir également d'un multi-couche de type NiCr/métal/NiCr, le métal étant choisi également notamment parmi l'argent, l'or, le platine, le cuivre.

Selon les configurations, ils peuvent être supprimés et dans ce cas des amenées de courant sont directement en contact avec l'empilement actif 3.

Le vitrage 1 incorpore des amenées de courant 8, 9 qui permettent de commander le système actif via une alimentation électrique. Ces amenées de courant sont du type de ceux utilisés pour les vitrages chauffants (à savoir clinquant, fils ou similaire).

Une forme préférée de réalisation du collecteur 2 consiste à déposer sur la face 2 une première couche SiOC de 50 nm surmontée d'une seconde couche en SnO₂:F de 400 nm (deux couches de préférence déposées successivement par CVD sur le verre float avant découpe).

Une seconde forme de réalisation du collecteur 2 consiste à déposer en face 2 un bicouche constitué d'une première couche à base de SiO₂ dopée ou non (notamment dopé avec de l'aluminium ou du bore) d'environ 20 nm surmontée d'une seconde couche d'ITO d'environ 100 à 600 nm (deux couches de préférence déposées successivement, sous vide, par pulvérisation cathodique assistée par champ magnétique et réactive en présence d'oxygène éventuellement à chaud).

Une autre forme de réalisation du collecteur 2 consiste à déposer en face 2 une mono couche constituée d'ITO d'environ 100 à 600 nm (une couche de préférence déposée, sous vide, par pulvérisation cathodique assistée par champ magnétique et réactive en présence d'oxygène éventuellement à chaud)

Le collecteur 4 est une couche d'ITO de 100 à 500 nm également déposée par pulvérisation cathodique réactive assistée par champ magnétique sur l'empilement actif.

L'empilement actif 3 représenté en figures 2, 3, 4 et 5 se décompose de la façon suivante selon une première variante de réalisation représentée en figure 4 :
- une couche de matériau électrochrome anodique en oxyde de nickel de 100 à 300 nm, alliée ou non à d'autres métaux.,
- une couche en oxyde de tantale hydraté ou d'oxyde de silice hydraté ou d'oxyde de zirconium hydraté de 100 nm ou un mélange de ces derniers,
- une couche de matériau électrochrome cathodique à base d'oxyde de tungstène de 200 à 500 nm, préférentiellement de 300 et 400 nm, notamment voisine de 370 nm.

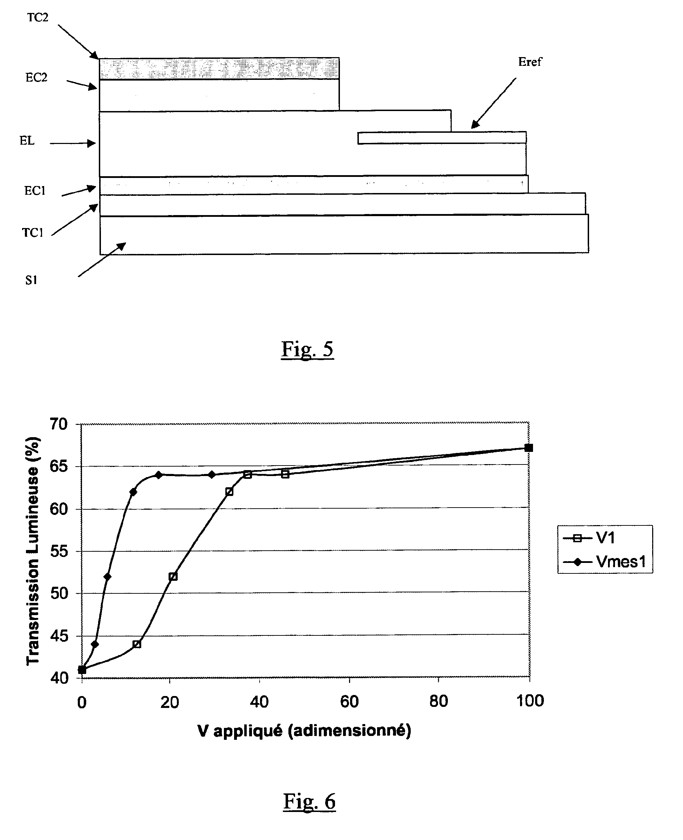

Selon une deuxième variante de réalisation représentée en figure 5, l'empilement actif 3 se décompose de la façon suivante :
- une couche de matériau électrochrome anodique en oxyde de nickel de 100 à 300 nm, alliée ou non à d'autres métaux.
- une couche en oxyde de tungstène hydraté de 100 nm,
- une couche en oxyde de tantale hydraté ou d'oxyde de silice hydraté ou d'oxyde de zirconium hydraté de 100 nm ou un mélange de ces derniers,
- une couche de matériau électrochrome cathodique à base d'oxyde de tungstène hydraté de 200 à 500 nm, préférentiellement de 300 et 400 nm, notamment voisine de 370 nm.

En effet, quel que soit le mode de réalisation du système électrocommandable, et en particulier l'empilement actif représenté en détail au niveau des figures 4, 5, la couche faisant office d'électrolyte intègre une électrode de référence (dénommée Eref sur les figures). Cette électrode de référence est en fait formée d'une couche mixte, d'une épaisseur comprise entre 5 nm et 300 nm, de préférence comprise entre 20 et 50 nm, à base d'une couche métallique et d'une couche de passivation comporte un cation du même métal que celui de la couche métallique. On peut choisir le métal parmi la famille suivante : tous les éléments de transition compris entre la colonne IVB (Ti-Zr-Hf) et la colonne IIB (Zn-Cd-Hg) du tableau périodique ou un mélange de ces derniers, de préférence parmi les éléments suivants : Cu, Ag, Ni, Al, Ti, Mo, W, Cr, Fe, Co, ou un mélange de ces derniers, et dans les exemples de réalisation représentés au niveau des figures 1 à 5, il s'agit d'une électrode de référence en Ni/NiO.

L'empilement actif 3 peut être incisé sur tout ou partie de sa périphéries de gorges réalisées par des moyens mécaniques ou par attaque par rayonnement laser, éventuellement pulsé, et ce afin de limiter les fuites électriques périphériques comme cela est décrit dans la demande française FR-2 781 084.

Par ailleurs, le vitrage représenté en figures 1, 2 et 3 incorpore (non représenté sur les figures) un premier joint périphérique en contact avec les faces 2 et 3, ce premier joint étant adapté pour réaliser une barrière aux agressions chimiques extérieures.

Un deuxième joint périphérique est en contact avec le chant de S1, le chant de S2 et la face 4, de manière à réaliser : une barrière, un moyen de montage avec le véhicule, une étanchéité entre l'intérieur et l'extérieur, une fonction esthétique, un moyen d'incorporation d'éléments de renfort.

Selon d'autres variantes, l'empilement actif 3 « tout solide » peut être remplacé par d'autres familles d'électrochromes du type polymère.

Ainsi, par exemple, une première partie formée d'une couche de matériau électrochrome ou autrement appelée couche active, en poly(3, 4-éthylène-dioxythiophène) de 10 à 10000 nm, de préférence de 50 à 500 nm ; en variante il peut s'agir de l'un des dérivés de ce polymère, est déposée par des techniques connues de dépôt par voie liquide (pulvérisation ou « spray coating», trempage ou « dip coating », pulvérisation rotative ou « spin coating » ou par coulée), ou encore par électrodéposition, sur un substrat revêtu de son collecteur de courant, ce collecteur de courant pouvant être une couche conductrice inférieure ou supérieure formant le conducteur électronique (l'anode ou la cathode), éventuellement pourvue de fils ou similaires. Quel que soit le polymère constituant cette couche active, ce polymère est particulièrement stable, notamment au UV, et fonctionne par insertion-désinsertion d'ions lithium (Li⁺) ou alternativement d'ions H⁺.

Une seconde partie jouant le rôle d'électrolyte, et formée d'une couche d'épaisseur comprise entre 50 nm à 2000 µm, et de préférence comprise entre 50 nm à 1000 µm, est déposée par une technique connue de dépôt par voie liquide (pulvérisation ou «spray coating », trempage ou « dip coating », pulvérisation rotative ou « spin coating » ou par coulée, entre les première et troisième parties sur la première partie ou encore par injection. Cette seconde partie est à base de polyoxyalkylène, notamment du polyoxyéthylène. Et peut être associée à une couche d'électrolyte de type minéral, à base par exemple d'oxyde hydraté de tantale, de zirconium ou de silicium.

Cette seconde partie d'électrolyte déposée sur la couche de matériau électrochrome active, elle-même supportée par le substrat en verre ou analogue, est alors revêtue par une troisième partie dont la constitution est analogue à la première partie, à savoir cette troisième partie se décompose en un substrat, revêtu d'un collecteur de courant (fils conducteurs, fils conducteurs + couche conductrice, couche conductrice uniquement), ce collecteur de courant étant lui-même recouvert par une couche active.

Sur la base de cet empilement électrochrome mixte (polymère/minéral), on se propose d'incorporer au sein de la couche d'électrolyte de type minéral, l'électrode de référence précédemment décrite.

Cet exemple correspond à un vitrage fonctionnant par transfert protonique. Il est constitué d'un premier substrat en verre 1, de verre silico-sodo-calcique de 4 mm, puis successivement :
- une première couche électroconductrice en SnO₂:F de 300 nm,
- une première couche de matériau électrochrome anodique en oxyde de nickel hydraté NiOₓH_{y} de 185 nm, (elle pourrait être remplacée par une couche en oxyde d'iridium hydraté de 55 nm),
- un électrolyte se décomposant en une première couche en oxyde de tantale hydraté de 70 nm, une seconde couche en solution solide de polyoxyéthylène avec de l'acide phosphorique POE-H₃PO₄ de 100 micromètres ou alternativement une solution solide de polyéthylène imine avec de l'acide phosphorique PEI-H₃PO₄, associé à
- une couche en oxyde de tantale hydraté ou d'oxyde de silice hydraté ou d'oxyde de zirconium hydraté de 100 nm ou un mélange de ces derniers,
- une seconde couche de matériau électrochrome cathodique à base d'oxyde de tungstène de 350 nm,
- une seconde couche de SnO₂:F de 300 nm puis un second substrat en verre identique au premier.

On a donc, dans cet exemple, un électrolyte bi-couche à base de polymère habituellement utilisé dans ce type de vitrage, qui est « doublé » d'une couche d'oxyde de tantale hydraté suffisamment conductrice pour ne pas pénaliser le transfert de protons via le polymère et qui protège la contre-électrode en matériau électrochrome anodique du contact direct avec ce dernier, dont l'acidité intrinsèque lui serait préjudiciable.

A la place de la couche en Ta₂O₅ hydraté peut être utilisée une couche de type Sb₂O₅ ou TaWOₓ hydraté.

On peut aussi prévoir un électrolyte tri-couche, avec deux couches d'oxyde hydraté, soit de part et d'autre de la couche de polymère, soit superposées l'une à l'autre du côté de la couche de matériau électrochrome anodique.

La structure d'électrocommandable telle que décrite précédemment avec son électrode de référence autorise un mode de pilotage innovant basé sur une comparaison du fonctionnement du système à l'instant t avec son fonctionnement par rapport à un modèle de connaissance préalablement établi.

La première étape consiste donc à établir une base de données, un modèle de connaissance du système électrocommandable.

On applique entre les amenées de courant du système électrocommandable un mode d'alimentation. Classiquement il s'agit d'une source de tension ou de courant ou une quantité de charges.

A titre d'exemple, on applique donc une première valeur de tension notée V1. Pour cette valeur de tension V1, on relève par des moyens appropriés une grandeur caractéristique du système. Il peut s'agir d'une propriété optique comme par exemple une valeur de transmission lumineuse.

On associe donc à cette valeur de tension V1 une valeur de transmission lumineuse.

Parallèlement à cette valeur de tension V1, on relève la tension entre l'électrode de référence et chacune des amenées de courant associée respectivement à le conducteur électronique inférieur et supérieur.

On a donc pour une même valeur de transmission lumineuse, trois valeurs de tension (entre les amenées de courant, et entre l'électrode de référence et chacune des amenées de courant).

Ces 4 données sont stockées dans un tableau.

On incrémente ensuite le niveau de tension entre une valeur minimale et une valeur maximale, et pour chacun de ces niveaux de tension, on construit l'ensemble de la base de données caractéristique des points de fonctionnements du système électrocommandable.

La phase de pilotage proprement dite consiste à réaliser une comparaison entre les valeurs de tension obtenues à un instant t aux bornes des amenées de courant et l'électrode de référence et les valeurs de fonctionnement du modèle de connaissance.

Un mode de fonctionnement peut être le suivant
- à un instant t, on applique un niveau de tension entre les amenées de courant correspondant à un certain niveau de transmission lumineuse. On relève à ce même t, la valeur du niveau de tension entre l'électrode de référence et l'une des amenées de courant, notée Vmes1.

Dans la mesure où on a besoin de faire modifier le niveau de la grandeur caractéristique, le niveau de transmission lumineuse par exemple à modifier le niveau de tension appliqué aux bornes des amenées de courant.

A cet instant t2, on relève le niveau Vmes2 au niveau de l'électrode de référence et l'amenée de courant identique à celle utilisée pour Vmes1.

On compare alors Vmes1 et Vmes2, et en fonction de l'écart, on réajuste la valeur du niveau de la tension appliquée entre les amenées de courant de façon à ce que la différence de potentiel entre l'une des amenées de courant et l'électrode de référence soit égale à une valeur sélectionnée dans un tableau de référence.

On donne ci-après un tableau de valeurs de niveaux de tension entre d'une part les 2 amenées de courant (à savoir V1 variant entre V1min et V1max) et d'autre part des valeurs de niveaux de tension mesurés entre l'une des amenées de courant et l'électrode de référence Vmes1. Chaque mesure a été normalisée entre 0 et 100, à savoir que 100 correspond à V1max et 0 correspond à V1min. Les mesures de Vmes1 ont également été normalisées entre 0 et 100, par les valeurs extrémales de Vmes1.

| TL (%) | V1 | Vmes1 |
|---|---|---|
| 67 | 100.0 | 100 |
| 64 | 45,8 | 29,4 |
| 64 | 37,5 | 17,6 |
| 62 | 33,3 | 11,8 |
| 52 | 20,8 | 5,9 |
| 44 | 12,5 | 2,9 |
| 41 | 0 | 0 |

Comme on peut le voir sur le graphe de la figure 6, le pilotage du système électrocommandable est amélioré si on base le choix de la valeur V1 en prenant en compte le niveau de tension de Vmes1 qui optimise le niveau de TL souhaité.

Le système électrocommandable tel que précédemment décrit peut être intégré au sein d'un vitrage présentant notamment une transmission et/ou réflexion lumineuse et/ou énergétique variable, ce vitrage étant constitué d'au moins un substrat, dans lequel au moins une partie du substrat est transparent ou partiellement transparent, en verre ou en matériau plastique, de préférence monté en vitrage multiple et/ou feuilleté, ou en double vitrage. On peut également associé à ce vitrage au moins une autre couche adaptée pour apporter une fonctionnalité supplémentaire (contrôle solaire, bas émissif, hydrophobe, hydrophile, anti-reflet).

Ces vitrages sont utilisés en tant que vitrage pour le bâtiment, vitrage pour l'automobile, vitrage de véhicules industriels ou de transport collectif, ferroviaire, maritime, aérien, rétroviseurs, miroirs.

## Revendications

1. Système électrocommandable à propriétés optiques/énergétiques, de transmission ou de réflexion variables, comportant au moins un substrat porteur muni d'un empilement de couches permettant la migration d'espèces actives, notamment électrochrome, comprenant au moins deux couches actives, séparées par au moins une couche à fonction électrolyte, la couche à fonction électrolyte intégrant au moins une électrode de réference, ledit empilement étant disposé entre deux conducteurs électroniques connectés respectivement à des amenées de courant, respectivement inférieure et supérieure, « inférieure » correspondant à l'amenée de courant la plus proche du substrat porteur, par opposition à l'amenée de courant « supérieure » qui est la plus éloignée dudit substrat, **caractérisé en ce que** l'électrode de référence est constituée d'une couche mixte à base d'une couche métallique et d'une couche de passivation du même métal que celui de la couche métallique.

2. Système selon la revendication 1, **caractérisé en ce que** la couche de passivation comporte un cation du même métal que celui de la couche métallique.

3. Système selon l'une des revendications 1 ou 2, **caractérisé en ce que** la couche de passivation comporte un oxyde du même métal que celui de la couche métallique.

4. Système selon l'une quelconque des revendications précédentes, **caractérisé en ce que** la couche de passivation comporte un halogénure, notamment un chlorure, du même métal que celui de la couche métallique.

5. Système selon l'une quelconque des revendications précédentes, **caractérisé en ce que** la couche de passivation comporte un sulfate, un nitrate du même métal que celui de la couche métallique.

6. Système selon l'une quelconque des revendications précédentes, **caractérisé en ce que** le métal est choisi parmi la famille suivante :tous les éléments de transition compris entre la colonne IVB (Ti-Zr-Hf) et la colonne IIB (Zn-Cd-Hg) du tableau périodique ou un mélange de ces derniers, de préférence parmi les éléments suivants : Cu, Ag, Ni, Al, Ti, Mo, W, Cr, Fe, Co, ou un mélange de ces derniers.

7. Système selon l'une quelconque des revendications précédentes, **caractérisé en ce que** l'épaisseur de la couche mixte est comprise entre 5 nm et 300 nm, de préférence comprise entre 20 et 50 nm .

8. Système selon la revendication 1, **caractérisé en ce que** la couche à fonction électrolyte comporte au moins une couche en matériau essentiellement minéral.

9. Système selon la revendication précédente, **caractérisé en ce que** la couche mixte est intégrée au sein de la couche en matériau essentiellement minéral

10. Système selon la revendication précédente, **caractérisé en ce que** la couche mixte est en retrait de l'une au moins des couches électrochromes.

11. Système selon la revendication 9, **caractérisé en ce que** la couche mixte est recouverte au moins en partie par l'une au moins des couches électrochromes.

12. Système selon l'une quelconque des revendications précédentes, **caractérisé en ce que** la couche mixte est intégrée au sein d'une portion de volume de la couche en matériau essentiellement minéral.

13. Système selon l'une quelconque des revendications précédentes, **caractérisé en ce que** la couche à fonction électrolyte comporte au moins une couche à base d'un matériau choisi parmi l'oxyde de tungstène WO₃, l'oxyde de tantale Ta₂O₅, l'oxyde d'antimoine Sb₂O₅, l'oxyde de nickel NiOₓ, l'oxyde d'étain SnO₂, l'oxyde de zirconium ZrO₂, l'oxyde d'aluminium Al₂O₃, de l'oxyde de silicium SiO₂ éventuellement allié avec de l'aluminium ou du bore, l'oxyde de niobium Nb₂O₅, l'oxyde de chrome Cr₂O₃, l'oxyde de cobalt Co₃O₄, l'oxyde de titane TiO₂, l'oxyde de zinc ZnO éventuellement allié avec de l'aluminium, l'oxyde de vanadium V₂O₅ éventuellement allié avec de l'aluminium, oxyde d'étain et de zinc SnZnOₓ, au moins un de ces oxydes étant éventuellement hydrogéné, ou nitruré.

14. Système selon l'une quelconque des revendications précédentes, **caractérisé en ce que** la couche à fonction électrolyte comporte au moins une autre couche à base d'un matériau polymère, ou à base de sels fondus.

15. Système selon la revendication précédente, **caractérisé en ce que** l'autre couche du type polymère est choisie parmi la famille des polyoxyalkylènes, notamment du polyoxyéthylène ou parmi la famille des polyéthylènes imines.

16. Système selon l'une quelconque des revendications 14 ou 15, **caractérisé en ce que** l'autre couche du type polymère est sous la forme d'un liquide anhydre ou aqueux ou à base de gel(s), ou de polymère(s), notamment un électrolyte du type couche à composé(s) hydrogéné(s) et/ou azoté(s) du type POE:H₃PO₄ ou encore une couche à composé(s) hydrogéné(s) et/ou azoté(s)/PEI:H₃PO₄, ou plus encore un polymère feuilletable.

17. Système selon l'une quelconque des revendications précédentes, **caractérisé en ce que** la couche électrochimiquement active comporte au moins un des composés suivants : oxyde de tungstène W, de niobium Nb, d'étain Sn, de bismuth Bi, de vanadium V, de nickel Ni, d'iridium lr, de l'antimoine Sb, du tantale Ta, seul ou en mélange, et comprenant éventuellement un métal additionnel tel que le titane, le rhénium.

18. Système selon l'une quelconque des revendications précédentes, **caractérisé en ce que** le conducteur électronique est de type métallique ou du type TCO en In₂O₃:Sn (ITO), SnO₂:F, ZnO :Al, ou un multi-couche du type TCO/métal/TCO, ce métal étant choisi notamment parmi l'argent, l'or, le platine, le cuivre, ou un multi-couche de type NiCr/métal/NiCr, le métal étant choisi également notamment parmi l'argent, l'or, le platine, le cuivre.

19. Vitrage électrochrome, **caractérisé en ce qu'**il comporte le système électrocommandable selon l'une des revendications précédentes, présentant notamment une transmission et/ou réflexion lumineuse et/ou énergétique variable, avec le substrat ou au moins une partie des substrats transparent(s) ou partiellement transparent(s), en verre ou en matériau plastique, de préférence monté en vitrage multiple et/ou feuilleté, ou en double vitrage.

20. Vitrage électrochrome, comportant le système électrochimique selon l'une des revendications 1 à 18, **caractérisé en ce qu'**il est associé à au moins une autre couche adaptée pour apporter une fonctionnalité supplémentaire , contrôle solaire, bas émissif, hydrophobe, hydrophile, anti-reflet, audit vitrage.

21. Procédé d'alimentation d'un système électrocommandable à propriétés optiques/énergétiques, de transmission ou de réflexion variables, selon l'une quelconque des revendications 1 à 18,
- on applique, à un premier instant t1, entre les amenées de courant un mode d'alimentation électrique noté M1 correspondant à un point de fonctionnement du système électrocommandable, ce mode d'alimentation électrique donnant une première mesure du mode d'alimentation électrique,
- on relève, à ce même premier instant t₁, une deuxième mesure notée Vmes 1 correspondant à une différence de potentiel entre l'une des amenées de courant et l'électrode de référence, et on relève au moins une grandeur caractéristique du système électrocommandable,
- à un deuxième instant t2, en fonction du niveau de la grandeur caractéristique désirée pour le système électrocommandable, on applique entre les amenées de courant un mode d'alimentation électrique M2, ce mode d'alimentation électrique donnant une troisième mesure du mode d'alimentation électrique et on effectue, à ce deuxième instant t2, une quatrième mesure notée Vmes2 correspondant à la différence de potentiel entre l'une des amenées de courant et l'électrode de référence,
- on compare cette quatrième mesure Vmes2 à la deuxième mesure Vmes 1,
- en fonction de l'écart entre Vmes2 et Vmes1, on réajuste la valeur du mode d'alimentation électrique appliqué entre les amenées de courant de façon à ce que la différence de potentiel entre l'une des amenées de courant et l'électrode de référence soit égale à une valeur sélectionnée dans un tableau de référence.

22. Procédé d'alimentation selon la revendication 21, **caractérisé en ce qu'**on reproduit les deux premières étapes du procédé d'alimentation pour une gamme de V1 sélectionnée entre V1min et V1max, correspondant aux grandeurs caractéristiques extrêmes souhaitées, pour obtenir pour chaque valeur de V1 la valeur de Vmes1 correspondante et on réalise ensuite un tableau de mesures de référence liant les grandeurs caractéristiques et la valeur de Vmes 1.

23. Procédé selon l'une des revendications 21 ou 22, **caractérisé en ce que** le mode d'alimentation électrique qui est appliqué entre les amenées de courant est choisi parmi l'alimentation en tension, l'alimentation en courant ou l'alimentation en quantité de charges.

24. Procédé selon la revendication 21, **caractérisé en ce que** la quatrième mesure Vmes2 ou la deuxième mesure Vmes1 correspondant à une différence de potentiel est réalisée entre l'électrode de référence et l'amenée de courant supérieure.

25. Procédé selon la revendication 21, **caractérisé en ce que** la quatrième mesure Vmes2 ou la deuxième mesure Vmes1 correspondant à une différence de potentiel est réalisée entre l'électrode de référence et l'amenée de courant inférieure.

26. Procédé selon l'une des revendications 21 à 25, **caractérisé en ce que** la grandeur caractéristique est choisie parmi les paramètres optiques du système électrocommandable comme la transmission lumineuse.

27. Procédé selon la revendication 21, **caractérisé en ce qu'**on élabore un tableau donnant l'évolution de la grandeur caractéristique pour diverses valeurs de différence de potentiel mesurée entre l'amenée de courant inférieure et l'électrode de référence.

28. Procédé selon la revendication 21, **caractérisé en ce qu'**on élabore un tableau donnant l'évolution de la grandeur caractéristique pour diverses valeurs de différence de potentiel mesurée entre l'amenée de courant supérieure et l'électrode de référence.

29. Procédé selon l'une des revendications 21 à 27, **caractérisé en ce qu'**on élabore un tableau donnant l'évolution de la transmission lumineuse pour diverses valeurs de différence de potentiel mesurées entre les deux amenées de courant respectivement inférieure et supérieure.

30. Utilisation du vitrage selon l'une des revendications 19 ou 20 en tant que vitrage pour le bâtiment, vitrage pour l'automobile, vitrage de véhicules industriels ou de transport collectif, ferroviaire, maritime, aérien, rétroviseurs, miroirs.

## Claims

1. Electrically controllable system having variable optical/energy properties in transmission or reflection, comprising at least one carrier substrate provided with a multilayer allowing the migration of active species, especially an electrochromic multilayer, comprising at least two active layers that are separated by at least one layer having an electrolyte function, the layer having an electrolyte function incorporating at least one reference electrode, said multilayer being placed between two electronic conductors connected respectively to current leads, namely lower and upper leads respectively, "lower" corresponding to the current lead closest to the carrier substrate, as opposed to the "upper" current lead, which is furthest from said substrate, **characterized in that** the reference electrode consists of a hybrid layer based on a metal layer and on a passivation layer for passivating the same metal as that of the metal layer.

2. System according to Claim 1, **characterized in that** the passivation layer includes a cation of the same metal as that of the metal layer.

3. System according to either of Claims 1 and 2, **characterized in that** the passivation layer comprises an oxide of the same metal as that of the metal layer.

4. System according to any one of the preceding claims, **characterized in that** the passivation layer comprises a halide, especially a chloride, of the same metal as that of the metal layer.

5. System according to any one of the preceding claims, **characterized in that** the passivation layer comprises a sulfate or nitrate of the same metal as that of the metal layer.

6. System according to any one of the preceding claims, **characterized in that** the metal is chosen from the following family: all the transition elements lying between column IVB (Ti-Zr-Hf) and column IIB (Zn-Cd-Hg) of the Periodic Table or a mixture of these elements, preferably chosen from the following elements: Cu, Ag, Ni, Al, Ti, Mo, W, Cr, Fe, Co, or a mixture thereof.

7. System according to any one of the preceding claims, **characterized in that** the thickness of the hybrid layer is between 5 nm and 300 nm, preferably between 20 and 50 nm.

8. The system according to Claim 1, **characterized in that** the layer having an electrolyte function includes at least one layer made of an essentially mineral material.

9. System according to the preceding claim, **characterized in that** the hybrid layer is incorporated within the layer made of an essentially mineral material.

10. System according to the preceding claim, **characterized in that** the hybrid layer is set back from at least one of the electrochromic layers.

11. System according to Claim 9, **characterized in that** the hybrid layer is at least partly covered with at least one of the electrochromic layers.

12. System according to any one of the preceding claims, **characterized in that** the hybrid layer is incorporated within a volume portion of the layer made of essentially mineral material.

13. System according to any one of the preceding claims, **characterized in that** the layer having an electrolyte function comprises at least one layer based on a material chosen from tungsten oxide WO₃, tantalum oxide Ta₂O₅, antimony oxide Sb₂O₅, nickel oxide NiOₓ, tin oxide SnO₂, zirconium oxide ZrO₂, aluminum oxide Al₂O₃, silicon oxide SiO₂ optionally alloyed with aluminum or boron, niobium oxide Nb₂O₅, chromium oxide Cr₂O₃, cobalt oxide Co₃O₄, titanium oxide TiO₂, zinc oxide ZnO optionally alloyed with aluminum, vanadium oxide V₂O₅ optionally alloyed with aluminum, and tin zinc oxide SnZnOₓ, at least one of these oxides being optionally hydrogenated or nitrided.

14. System according to any one of the preceding claims, **characterized in that** the layer having an electrolyte function includes at least one other layer based on a polymer material based on molten salts.

15. System according to the preceding claim, **characterized in that** the other layer of the polymer type is chosen from the family of polyoxyalkylenes, especially polyoxyethylene, or from the family of polyethyleneimines.

16. System according to either of Claims 14 and 15, **characterized in that** the other layer of the polymer type is in the form of an anhydrous or aqueous liquid or based on one or more gels or on one or more polymers, especially an electrolyte of the layer type based on one or more hydrogenated and/or nitrogenated compounds of the POE:H₃PO₄ type, or else a layer based on one or more hydrogenated and/or nitrogenated /PEI:H₃PO₄ compounds, or else on a laminatable polymer.

17. System according to any one of the preceding claims, **characterized in that** the electrochemically active layer comprises at least one of the following compounds: tungsten (W) oxide, niobium (Nb) oxide, tin (Sn) oxide, bismuth (Bi) oxide, vanadium (V) oxide, nickel (Ni) oxide, iridium (Ir) oxide, antimony (Sb) oxide and tantalum (Ta) oxide, by itself or as a mixture, and optionally including an additional metal such as titanium or rhenium.

18. System according to any one of the preceding claims, **characterized in that** the electronic conductor is of the metallic type or of the TCO type, made of In₂O₃:Sn (ITO), SnO₂:F or ZnO:A1, or is a multilayer of the TCO/metal/TCO type, this metal being chosen in particular from silver, gold, platinum, copper, or a multilayer of the NiCr/metal/NiCr type, the metal also being chosen in particular from silver, gold, platinum and copper.

19. Electrochromic glazing, **characterized in that** it includes the electrically controllable system according to one of the preceding claims, having in particular a variable light and/or energy transmission and/or reflection, with the substrate or at least one part of the substrates being transparent or partially transparent, made of glass or plastic, preferably mounted as multiple and/or laminated glazing, or as double glazing.

20. Electrochromic glazing, which includes the electrochemical system according to one of Claims 1 to 18, **characterized in that** it is combined with at least one other layer suitable for providing said glazing with an additional functionality, namely solar control, low emissivity, hydrophobicity, hydrophilicity, antireflection.

21. Method for supplying an electrically controllable system having variable optical/energy properties according to any one of Claims 1 to 18, **characterized in that:**
- an electrical supply mode denoted by M1, corresponding to one operating point of the electrically controllable system, is applied at a first instant t1 between the current leads, this electrical supply mode giving a first measurement of the electrical supply mode;
- at this same first instant t1, a second measurement denoted by Vmes1, corresponding to a potential difference between one of the current leads and the reference electrode, is recorded and at least one quantity characteristic of the electrically controllable system is recorded;
- at a second instant t2, which depends on the level of the desired characteristic quantity of the electrically controllable system, an electrical supply mode M2 is applied between the current leads, this electrical supply mode giving a third measurement of the electrical supply mode, and, at this second instant t2, a fourth measurement denoted by Vmes2, corresponding to the potential difference between one of the current leads and the reference electrode, is taken;
- this fourth measurement Vmes2 is compared with the second measurement Vmes1; and
- the value of the electrical supply mode applied between the current leads is readjusted according to the difference between Vmes2 and Vmes1, so that the potential difference between one of the current leads and the reference electrode is equal to a value selected from a reference table.

22. Supply method according to Claim 21, **characterized in that** the first two steps of the supply method are repeated for a range of V1 selected between V1min and V1max, corresponding to the desired extreme characteristic quantities, in order to obtain for each value of V1 the corresponding value of Vmes1, and a table of reference measurements linking the characteristic quantities with the value of Vmes1 is then produced.

23. Method according to either of Claims 21 and 22, **characterized in that** the electrical supply mode that is applied between the current leads is chosen from the voltage supply, the current supply and the charge supply.

24. Method according to Claim 21, **characterized in that** the fourth measurement Vmes2 or the second measurement Vmes1 corresponding to a potential difference is taken between the reference electrode and the upper current lead.

25. Method according to Claim 21, **characterized in that** the fourth measurement Vmes2 or the second measurement Vmes1 corresponding to a potential difference is taken between the reference electrode and the lower current lead.

26. Method according to one of Claims 21 to 25, **characterized in that** the characteristic quantity is chosen from the optical parameters of the electrically controllable system, such as the light transmission.

27. Method according to Claim 21, **characterized in that** a table giving the change in the characteristic quantity for various values of the potential difference measured between the lower current lead and the reference electrode is generated.

28. Method according to Claim 21, **characterized in that** a table giving the change in the characteristic quantity for various values of the potential difference measured between the upper current lead and the reference electrode is generated.

29. Method according to one of Claims 21 to 27, **characterized in that** a table giving the change in the light transmission for various values of the potential difference measured between the respective lower and upper current leads is generated.

30. Use of the glazing according to either of Claims 19 and 20 as architectural glazing, automotive glazing, windows for industrial or rail, sea or air mass-transit vehicles, rear-view mirrors, or other mirrors.

## Patentansprüche

1. Elektrisch steuerbares System mit veränderlichen optischen/energetischen und Transmissions- oder Reflexionseigenschaften, das mindestens ein Substrat umfasst, das mit einem Schichtaufbau versehen ist, der die Migration insbesondere elektrochromer aktiver Spezies erlaubt und mindestens zwei aktive Schichten umfasst, die durch mindestens eine Schicht mit Elektrolytfunktion voneinander getrennt sind, wobei in der Schicht mit Elektrolytfunktion mindestens eine Bezugselektrode integriert ist, dieser Aufbau zwischen zwei Elektronenleitern angeordnet ist, die mit einer unteren bzw. oberen Stromzuführung verbunden sind, und "untere" der Stromzuführung entspricht, die dem Substrat am nächsten liegt, im Gegensatz zur "oberen" Stromzuführung, die von diesem Substrat am weitesten entfernt ist, **dadurch gekennzeichnet, dass** die Bezugselektrode von einer Mischschicht auf der Basis einer Metallschicht und einer Passivierungsschicht desselben Metalls wie demjenigen der Metallschicht gebildet ist.

2. System nach Anspruch 1, **dadurch gekennzeichnet, dass** die Passivierungsschicht ein Kation desselben Metalls wie dasjenige der Metallschicht umfasst.

3. System nach Anspruch 1 oder 2, **dadurch gekennzeichnet, dass** die Passivierungsschicht ein Oxid desselben Metalls wie dasjenige der Metallschicht umfasst.

4. System nach einem der vorhergehenden Ansprüche, **dadurch gekennzeichnet, dass** die Passivierungsschicht ein Halogenid, insbesondere ein Chlorid, desselben Metalls wie dasjenige der Metallschicht umfasst.

5. System nach einem der vorhergehenden Ansprüche, **dadurch gekennzeichnet, dass** die Passivierungsschicht ein Sulfat, ein Nitrat desselben Metalls wie dasjenige der Metallschicht umfasst.

6. System nach einem der vorhergehenden Ansprüche, **dadurch gekennzeichnet, dass** das Metall aus folgender Familie ausgewählt wird: alle Übergangselemente, die von der Gruppe IVB (Ti-Zr-Hf) und der Gruppe IIB (Zn-Cd-Hg) des Periodensystems eingeschlossen sind, oder einem Gemisch von diesen, vorzugsweise aus folgenden Elementen: Cu, Ag, Ni, Al, Ti, Mo, W, Cr, Fe und Co oder einem Gemisch aus diesen.

7. System nach einem der vorhergehenden Ansprüche, **dadurch gekennzeichnet, dass** die Dicke der Mischschicht 5 bis 300 nm und vorzugsweise 20 bis 50 nm beträgt.

8. System nach Anspruch 1, **dadurch gekennzeichnet, dass** die Schicht mit Elektrolytfunktion mindestens eine Schicht aus einem im Wesentlichen anorganischen Material umfasst.

9. System nach dem vorhergehenden Anspruch, **dadurch gekennzeichnet, dass** die Mischschicht in die Schicht aus dem im Wesentlichen anorganischen Material integriert ist.

10. System nach dem vorhergehenden Anspruch, **dadurch gekennzeichnet, dass** die Mischschicht gegenüber mindestens einer der elektrochromen Schichten zurückgesetzt ist.

11. System nach Anspruch 9, **dadurch gekennzeichnet, dass** die Mischschicht wenigstens teilweise mit mindestens einer der elektrochromen Schichten bedeckt ist.

12. System nach einem der vorhergehenden Ansprüche, **dadurch gekennzeichnet, dass** die Mischschicht in einen Volumenteil der Schicht aus dem im Wesentlichen anorganischen Material integriert ist.

13. System nach einem der vorhergehenden Ansprüche, **dadurch gekennzeichnet, dass** die Schicht mit Elektrolytfunktion mindestens eine Schicht auf der Basis eines Materials umfasst, das aus Wolframoxid, WO₃, Tantaloxid, Ta₂O₅, Antimonoxid, Sb₂O₅, Nickeloxid, NiOₓ, Zinnoxid, SnO₂, Zirconiumoxid, ZrO₂, Aluminiumoxid, Al₂O₃, Siliciumoxid, SiO₂, gegebenenfalls mit Aluminium oder Bor legiert, Nioboxid, Nb₂O₅, Chromoxid, Cr₂O₃, Cobaltoxid, Co₃O₄, Titanoxid, TiO₂, Zinkoxid, ZnO, gegebenenfalls mit Aluminium legiert, Vanadiumoxid, V₂O₅, gegebenenfalls mit Aluminium legiert, und Zinn-Zink-Oxid, SnZnOₓ, wobei mindestens eins dieser Oxide gegebenenfalls hydriert oder nitridiert ist, ausgewählt ist.

14. System nach einem der vorhergehenden Ansprüche, **dadurch gekennzeichnet, dass** die Schicht mit Elektrolytfunktion mindestens eine andere Schicht auf der Basis eines polymeren Materials oder auf der Basis geschmolzener Salze umfasst.

15. System nach dem vorhergehenden Anspruch, **dadurch gekennzeichnet, dass** die andere Schicht vom Typ eines Polymers aus der Familie der Polyoxyalkylene, insbesondere Polyoxyethylen, oder aus der Familie der Polyethylenimine ausgewählt ist.

16. System nach Anspruch 14 oder 15, **dadurch gekennzeichnet, dass** die andere Schicht vom Typ eines Polymers in Form einer wasserfreien oder wässrigen Flüssigkeit vorliegt oder auf der Basis eines oder mehrerer Gele oder eines oder mehrerer Polymerer und insbesondere ein Elektrolyt vom Typ Schicht mit einer oder mehreren hydrierten und/oder azotierten Verbindungen vom Typ POE:H₃PO₄, eine Schicht mit einer oder mehreren hydrierten und/oder azotierten Verbindungen/PEI:H₃PO₄ oder ein Verbundpolymer ist.

17. System nach einem der vorhergehenden Ansprüche, **dadurch gekennzeichnet, dass** die elektrochemisch aktive Schicht mindestens eine der folgenden Verbindungen: Oxid des Wolframs, W, Niobs, Nb, Zinns, Sn, Wismuts, Bi, Vanadiums, V, Nickels, Ni, Iridiums, Ir, Antimons, Sb, und Tantals, Tr, allein oder im Gemisch und gegebenenfalls ein zusätzliches Metall wie Titan und Rhenium umfasst.

18. System nach einem der vorhergehenden Ansprüche, **dadurch gekennzeichnet, dass** der Elektronenleiter vom Metalltyp oder vom Typ TCO aus In₂O3:Sn (ITO), SnO₂:F, ZnO:Al, oder eine Multischicht vom Typ TCO/Metall/TCO, wobei das Metall insbesondere aus Silber, Gold, Platin und Kupfer ausgewählt ist, oder eine Multischicht vom Typ NiCr/Metall/NiCr ist, wobei das Metall ebenfalls insbesondere aus Silber, Gold, Platin und Kupfer ausgewählt ist.

19. Elektrochromes Glas, **dadurch gekennzeichnet, dass** es das elektrisch steuerbare System nach einem der vorhergehenden Ansprüche umfasst und insbesondere eine veränderliche Lichttransmission und/oder Lichtreflexion und/oder Energietransmission und/oder Energiereflexion aufweist, wobei das Substrat oder wenigstens ein Teil des (der) transparenten oder teilweise transparenten Substrate(s) aus Glas oder Kunststoff und vorzugsweise in einer Mehrfach- und/oder Verbundverglasung oder einer Doppelverglasung eingebaut ist.

20. Elektrochromes Glas, welches das elektrochemische System nach einem der Ansprüche 1 bis 18 umfasst, **dadurch gekennzeichnet, dass** es mit mindestens einer anderen geeigneten Schicht verbunden ist, die dem Glas eine zusätzliche niedrig emittierende, hydrophobe, hydrophile, Sonnenschutz- und Antireflexfunktionalität hinzufügt.

21. Verfahren zur Versorgung eines elektrisch steuerbaren Systems mit veränderlichen optischen/energetischen und Transmission- oder Reflexionseigenschaften nach einem der Ansprüche 1 bis 18, **dadurch gekennzeichnet, dass**
- zu einem ersten Zeitpunkt t1 zwischen den Stromzuführungen ein als M1 bezeichneter elektrischer Versorgungsmodus angelegt wird, der einem Betriebspunkt des elektrisch steuerbaren Systems entspricht, wobei dieser elektrische Versorgungsmodus einen ersten Messwert des elektrischen Versorgungsmodus ergibt,
- zu diesem ersten Zeitpunkt t1 ein zweiter als Vmes1 bezeichneter Messwert erhalten wird, der einer Potenzialdifferenz zwischen einer der Stromzuführungen und der Bezugselektrode entspricht, und mindestens eine charakteristische Größe des elektrisch steuerbaren Systems bestimmt wird,
- zu einem zweiten Zeitpunkt t2 in Abhängigkeit von der Höhe der charakteristischen Größe, die für das elektrisch steuerbare System erwünscht ist, zwischen den Stromzuführungen ein elektrischer Versorgungsmodus M2 angelegt wird, wobei dieser elektrische Versorgungsmodus einen dritten Messwert des elektrischen Versorgungsmodus ergibt, und zu diesem zweiten Zeitpunkt t2 ein als Vmes2 bezeichneter vierter Messwert erhalten wird, der der Potenzialdifferenz zwischen einer der Stromzuführungen und der Bezugselektrode entspricht,
- der vierte Messwert Vmes2 mit dem zweiten Messwert Vmes1 verglichen wird und
- in Abhängigkeit von der Differenz zwischen Vmes2 und Vmes1 der Wert des elektrischen Versorgungsmodus, der zwischen den Stromzuführungen angelegt wird, derart erneut eingestellt wird, dass die Potenzialdifferenz zwischen einer der Stromzuführungen und der Bezugselektrode gleich einem aus einer Bezugstabelle ausgewählten Wert ist.

22. Versorgungsverfahren nach Anspruch 21, **dadurch gekennzeichnet, dass** die zwei ersten Stufen des Versorgungsverfahrens für einen Bereich von V1 wiederholt werden, der zwischen V1min und V1max ausgewählt ist, die den gewünschten extremen charakteristischen Größen entsprechen, um für jeden Wert von V1 den entsprechenden Wert von Vmes1 zu erhalten, und anschließend eine Bezugsmesswerttabelle aufgestellt wird, welche die charakteristischen Größen und den Wert von Vmes1 verbindet.

23. Verfahren nach Anspruch 21 oder 22, **dadurch gekennzeichnet, dass** der elektrische Versorgungsmodus, der zwischen den Stromzuführungen angelegt wird, aus Spannungsversorgung, Stromversorgung oder Versorgung mit einer Ladungsmenge ausgewählt wird.

24. Verfahren nach Anspruch 21, **dadurch gekennzeichnet, dass** der vierte Messwert Vmes2 oder der zweite Messwert Vmes1, der einer Potenzialdifferenz entspricht, zwischen der Bezugselektrode und der oberen Stromzuführung erhalten wird.

25. Verfahren nach Anspruch 21, **dadurch gekennzeichnet, dass** der vierte Messwert Vmes2 oder der zweite Messwert Vmes1, der einer Potenzialdifferenz entspricht, zwischen der Bezugselektrode und der unteren Stromzuführung erhalten wird.

26. Verfahren nach einem der Ansprüche 21 bis 25, **dadurch gekennzeichnet, dass** die charakteristische Größe aus den optischen Parametern des elektrisch steuerbaren Systems wie dem Lichttransmissionsgrad ausgewählt wird.

27. Verfahren nach Anspruch 21, **dadurch gekennzeichnet, dass** eine Tabelle aufgestellt wird, welche die Veränderung der charakteristischen Größe für verschiedene Werte der Potenzialdifferenz, die zwischen der unteren Stromzuführung und der Bezugselektrode gemessen worden ist, wiedergibt.

28. Verfahren nach Anspruch 21, **dadurch gekennzeichnet, dass** eine Tabelle aufgestellt wird, welche die Veränderung der charakteristischen Größe für verschiedene Werte der Potenzialdifferenz, die zwischen der oberen Stromzuführung und der Bezugselektrode gemessen worden ist, wiedergibt.

29. Verfahren nach einem der Ansprüche 21 bis 27, **dadurch gekennzeichnet, dass** eine Tabelle aufgestellt wird, welche die Veränderung des Lichttransmissionsgrades für verschiedene Werte der Potenzialdifferenz, die zwischen den zwei Stromzuführungen, unterer bzw. oberer Stromzuführung, gemessen worden sind, wiedergibt.

30. Verwendung des Glases nach Anspruch 19 oder 20 als Glas für das Bauwesen, Glas für den Automobilbau, Glas für Nutzfahrzeuge oder öffentliche, Eisenbahn-, See- und Lufttransportmittel, für Rückspiegel und Spiegel.
